# EUROPEAN PATENT APPLICATION

(11) **EP 2 892 018 A1**
(43) Date of publication of application: **08.07.2015**
(21) Application number: 14198072.2
(22) Date of filing: 15.12.2014
(51) Int. Cl.: G06Q 30/02

(54) **Automated compilation of graph input for the hipergraph solver**

(30) Priority: 06.01.2014 US 201414148435
(71) Applicant: Palo Alto Research Center Incorporated, Palo Alto, California 94304 (US)
(72) Inventor: Huang, Eric, San Francisco, CA California 94107 (US); Zhou, Rong, San Jose, CA California 95129 (US); Davies, Daniel, Palo Alto, California, CA California 94306 (US)
(74) Representative: Lord, Michael

(57) **Abstract**

One embodiment of the present invention provides a system for generating a product recommendation by translating transaction data to graph representation for input to a graph analytics application. During operation, the system generates a transaction table to store transaction data, a customer table to store customer data, and a product table to store products data. The system generates a table containing topology and edge identifier information and a table containing edge attribute information. Next, the system generates headers that include data describing the customer table and/or the product table and/or the table containing edge attribute information. The system then generates files containing the one or more headers and data from the tables, in which the data describes a graph with edges representing transactions and vertices representing customers or products. Subsequently, the system submits the one or more files as input to the graph analytics application to generate a product recommendation.

## Description

### BACKGROUND

### Field

The present disclosure relates to graph analytics. More specifically, this disclosure relates to a method and system for translating transaction data to graph representation for input to a graph analytics application, thereby facilitating efficient collaborative filtering applications.

### Related Art

Hipergraph is a high-performance graph analytics engine that performs very fast queries on graph data. Graph data is data that can be easily represented by a graph. A graph is a set of vertices with edges that connect them. Hipergraph requires the input to be in a very specific format, but formatting many real-world graph datasets is non-trivial because the formatting operations exceed the typical memory and disk capacities of a single machine.

In one approach, one can perform automated compilation and formatting of data using scripts and UNIX utilities. This approach works relatively well when the inputs and output files and intermediary computation fit on a modern workstation. However, when the input graph dataset is on the order of several hundred gigabytes, one cannot even sort the data on a standard machine because of the time, disk space, and memory space required.

### SUMMARY

One embodiment of the present invention provides a system for generating a product recommendation by translating transaction data to graph representation for input to a graph analytics application. During operation, the system generates a transaction table to store transaction data, a customer table to store customer data, and a product table to store products data. The system then generates, with data from the transaction table, a table containing topology and edge identifier information and a table containing edge attribute information. Next, the system generates one or more headers that include data describing the customer table and/or the product table and/or the table containing edge attribute information. Subsequently, the system generates one or more files containing the one or more headers and data from the tables, in which the data describes a graph with edges representing transactions and vertices representing customers or products. The system then submits the one or more files as input to the graph analytics application to generate a product recommendation.

In a variation on this embodiment, generating a transaction table, a customer table, and a products table includes retrieving data from a table storing data according to a relational model.

In a variation on this embodiment, the transactions are purchase transactions.

In a variation on this embodiment, generating a customer table and/or product table and/or transaction table includes assigning unique consecutive integer values to each row of the customer table and/or product table and/or transaction table.

In a variation on this embodiment, the system sorts the table containing topology and edge identifier information first by the customer ID, then the edge type, then the product ID, and then the transaction ID.

In a variation on this embodiment, every step of the method is executed by a single script.

### BRIEF DESCRIPTION OF THE FIGURES

FIG. 1 presents a block diagram illustrating an exemplary architecture of a graph translation system, according to an embodiment.
FIG. 2 presents a block diagram illustrating an overview of a process for compiling data from a main table to generate a graph, according to an embodiment.
FIG. 3A presents a block diagram illustrating an exemplary header for a customer table, according to an embodiment.
FIG. 3B presents a block diagram illustrating an exemplary header for a product table, according to an embodiment.
FIG. 3C presents a block diagram illustrating an exemplary header for an edge attributes table, according to an embodiment.
FIG. 3D presents a block diagram illustrating an exemplary customer table with sample customer data, according to an embodiment.
FIG. 3E presents a block diagram illustrating an exemplary product table with sample product data, according to an embodiment.
FIG. 3F presents a block diagram illustrating an exemplary edge attributes table with sample edge data, according to an embodiment.
FIG. 3G presents a block diagram illustrating a table with exemplary edge data representing a graph topology, according to an embodiment.
FIG. 4A and FIG. 4B presents a flowchart illustrating an exemplary process for generating tables and headers as input for the graph analytics application, according to an embodiment.
FIG. 5 presents a block diagram illustrating an exemplary apparatus for generating a graph representation from transaction data, in accordance with an embodiment.
FIG. 6 illustrates an exemplary computer system for generating a graph representation from transaction data, in accordance with an embodiment.
In the figures, like reference numerals refer to the same figure elements.

### DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

### Overview

Embodiments of the present invention solve the problem of translating transaction data to a format suitable for input to a graph analytics application by automatically compiling the data and translating the data to a graph model representation. A graph translation system may extract data from a data source, such as a relational table storing various types of data. The system processes and projects the data into intermediate tables, generates headers, and then writes the tables, headers, and additional tables with data describing a graph topology and associated edge attribute data into a suitably formatted text file. The generated graph reflects transaction relationships found in the extracted data. The graph translation system may then submit the generated graph data as input to a graph analytics application (e.g., Hipergraph) for analysis. One example application is analyzing purchase transaction data with Hipergraph to perform collaborative filtering, in order to suggest product recommendations to users.

The Hipergraph engine requires its input to be a text file formatted in a very specific way, with certain constraints and formatting requirements. The input text file should include a description of a graph and other associated data, including the graph topology and data associated with vertices. The graph structure data should be separated from data describing attributes of the vertices and edges. For collaborative filtering, vertices represent customers or products, while edges represent purchase transactions.

In one implementation, the system utilizes data warehousing software such as Hive built on top of Hadoop. Hive is a data warehouse system for Hadoop. Hive facilitates easy data summarization, ad-hoc queries, and the analysis of large datasets residing in distributed storage with Hadoop-compatible file systems. Hive provides a SQL interface to access the stored data. Hadoop is the storage layer. Hadoop is a framework for the distributed processing of large data sets across clusters of machines, pulling together the machines' and CPU power. Hadoop provides for storage of data across the clusters, and allows for scaling from a single server to thousands of machines. It provides a scalable distributed file system that spans all the nodes in the clusters. Retailers may store hundreds of gigabytes of data in a Hadoop cluster. One may use Hive with Hadoop and Bash scripting in order to automatically compile data from typical relational database tables into a format appropriate for Hipergraph. Bash is a Unix shell. Bash can read commands from a script file and execute the commands within the script.

The input to Hipergraph is a set of tables and headers generated with Hive. In some implementations, one can execute SQL scripts in Hive to project customer, product, and transaction data from a main table to smaller intermediate tables. For example, in a retail database, there may be a main table where one column stores customer IDs, and another column stores the product ID for a purchase that the customer made. Other columns in this main table may store a transaction ID and the date of such a transaction. The intermediate tables generated by Hive may be written to storage in the form of text files, where each new-line delimited line in a text file represents a row in the table. The system may also generate headers and a table describing the topology of the graph, and another table describing attributes of edges.

One can utilize an automated procedure for translating data stored according to the relational model to a graph representation that is suitably formatted for input to Hipergraph. In an example implementation, one can invoke a script with a single command to produce graph representation output that can serve as input into Hipergraph. The system generates a text file with data representing the graph structure as the input to Hipergraph. The system may sort the columns of these files with a specific ordering, as specified by Hipergraph. The system can then input the generated graph to Hipergraph, thereby facilitating efficient analysis of transaction data.

The system may utilize the techniques disclosed herein to provide recommendations to a customer. A retailer may sell products to customers, and in order to provide recommendations to customers, the system may perform collaborative filtering. But collaborative filtering requires an analysis of customer transaction data, including purchase data. The system may examine a customer's purchase item, and then determine the purchases made by other customers who also purchased the same item as the first customer. The system may then recommend an item to the first customer. The customer transaction data may be mixed with other data and stored in a relational database (or some other format unsuitable for direct input to Hipergraph). The system can apply the translation techniques discussed herein to translate the transaction data into a format suitable for input to Hipergraph. Hipergraph can traverse graphs very efficiently to perform collaborative filtering.

For collaborative filtering, the system may generate a bipartite graph with purchase transaction data extracted from a retailer's database. A bipartite graph is a graph with vertices that can be divided into two disjoint sets U and V such that every edge connects a vertex in set U to a vertex in set V. Vertices representing products make up one set of the bipartite graph and vertices representing customers make up the other set of the bipartite graph. The graph represents the retailer's database of transaction data. Hipergraph may then traverse the bipartite graph to generate a product recommendation.

Note that without the translation process disclosed herein, one would need to perform database joins with data from a relational table, which is a time-consuming, inefficient process, especially when large relational tables are involved. Rather than performing database joins, the system traverses the bipartite graph with Hipergraph. For example, Hipergraph may traverse the bipartite graph to generate a product recommendation. Performing graph traversal in order to generate a product recommendation is much faster than performing a join with database tables.

Although examples are discussed herein with respect to Hipergraph, embodiments of the present invention may apply the disclosed techniques with any graph analytics application. Some embodiments may utilize a relational interface, such as HBase or SQL, instead of Hive. Some of the scripts may be written in C/C++ or other scripting languages, or standard UNIX scripting programs such as cat, join, paste, cut, and sort.

### System Architecture

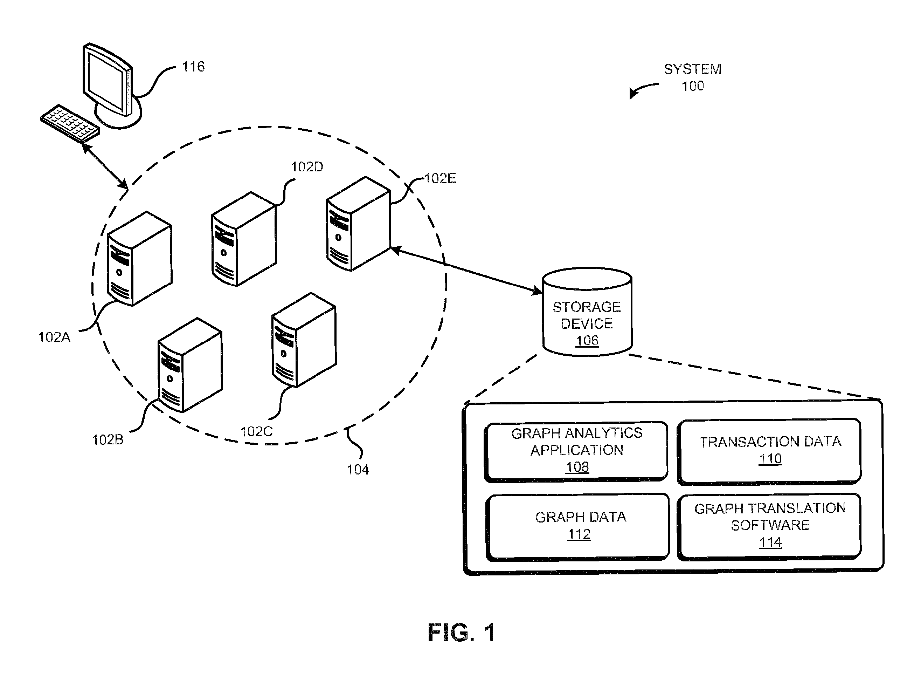

FIG. 1 presents a block diagram illustrating an exemplary architecture of a graph translation system 100, according to an embodiment. System 100 may extract data stored according to a relational model (or any other data model) and translate the data to a suitable format representing a graph. The translated data should be appropriate for input to a graph analytics application (e.g., Hipergraph).

System 100 may include a set of servers 102A-102E executing as part of a cluster 104. Each of the servers 102A-102E may include a software and data stored on a storage device. For example, server 102E may include a storage device 106. Storage device 106 may store data and software such as graph analytics application 108 (e.g., Hipergraph), transaction data 110, graph data 112, and graph translation software 114. Some implementations may also include a client 116 communicating with servers in cluster 104 to request graph translation services associated with Hipergraph.

Note that different implementations of the present invention may include any number of servers and storage devices. Various inventive aspects of system 100 are further described below.

### Compiling Data to Generate a Graph

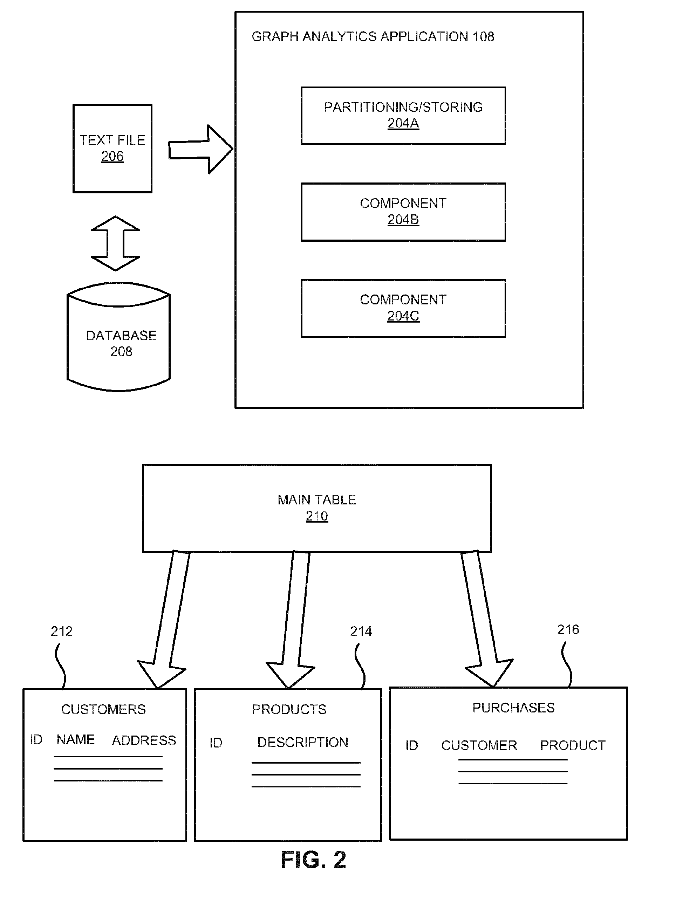

FIG. 2 presents a block diagram illustrating an overview of a process for compiling data from a main table to generate a graph, according to an embodiment. FIG. 2 illustrates how system 100 may translate transaction data to a format suitable for Hipergraph. System 100 may extract data from a main table to form intermediate tables, associated headers, and a topology table and edge attributes table. System 100 may then write the intermediate tables, headers, and other tables to one or more text files.

As illustrated in FIG. 2, graph analytics application 108 includes partitioning/storing component 204A and other components 204B-204C. Components 204B-204C may represent any number of components that facilitate analysis of an input graph. Graph analytics application 108 accepts as input a text file 206, which is stored in a database 208. Text file 206 contains data describing a graph representation generated from data retrieved from main table 210. Note that, depending on implementation, text file 206 may represent one or more text files.

System 100 may generate intermediate tables that include a customer table 212, a product table 214, and a purchase table 216. Customer table 212 may store data describing customers. Product table 214 may store data describing products that are available for purchase. Purchase table 216 may store data describing customer purchases of products, although different implementations may also include other types of transactions in this or another transaction table. System 100 retrieves data from main table 210, and stores the retrieved data in customer table 212, product table 214, and purchase table 216. Main table 210 may store data according to, for example, the relational model. Different retailers may store main tables that, depending on the domain, vary in structure or type of data stored, and may include any number of tables.

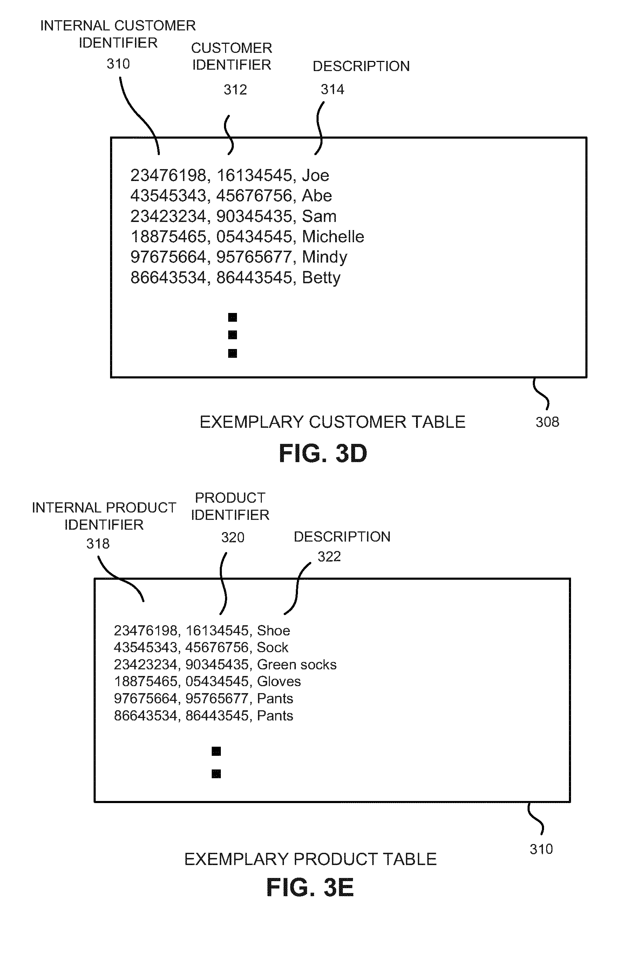

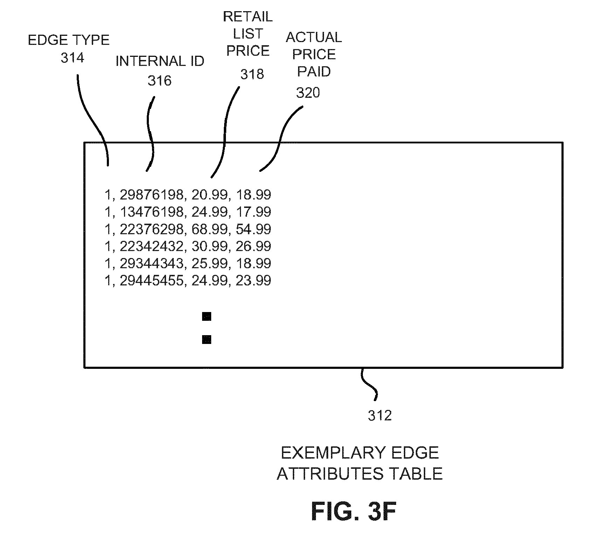

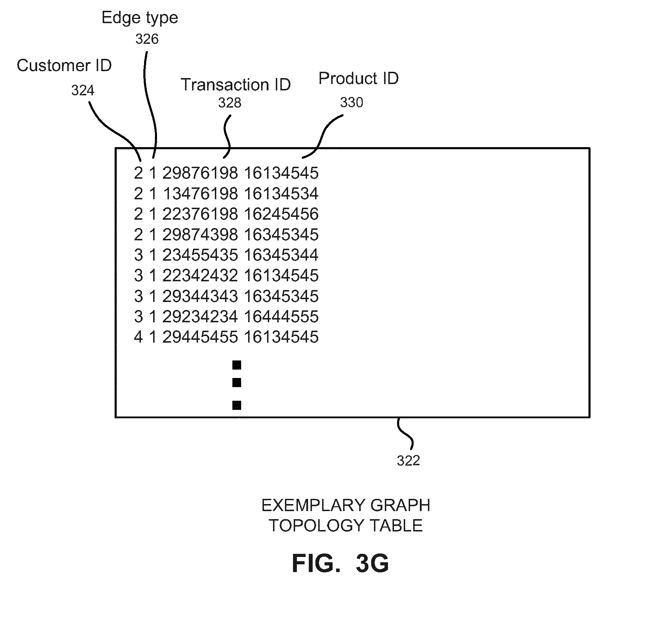

In the example implementation, system 100 generates some headers for the intermediate tables and writes the intermediate tables and headers to text file 206. System 100 may also include other tables containing edge-related information for submission to graph analytics application 108. One of the tables is illustrated in FIG. 3G and contains example data describing the topology of a graph. Another table may include edge attribute information, an example of which is depicted in FIG. 3F. System 100 may include the topology and edge attribute tables in text file 206. System 100 may also include in text file 206 another topology table that is a redundant table having columns sorted differently from the topology table depicted in FIG. 3G. Examples of the tables are depicted in FIG. 3D to FIG. 3G. System 100 then submits text file 206 to graph analytics application 108. Note that some implementations may write headers and tables to multiple, separate text files and submit all the text files to graph analytics application 108.

### Exemplary Headers and Tables

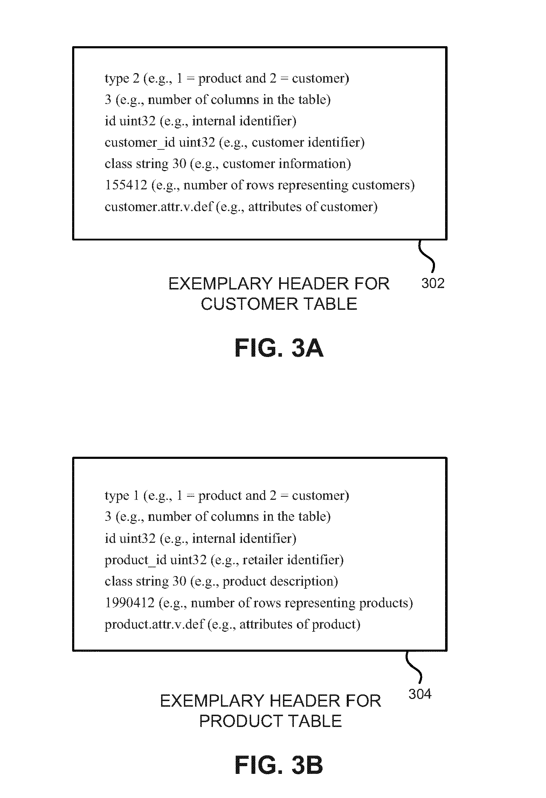

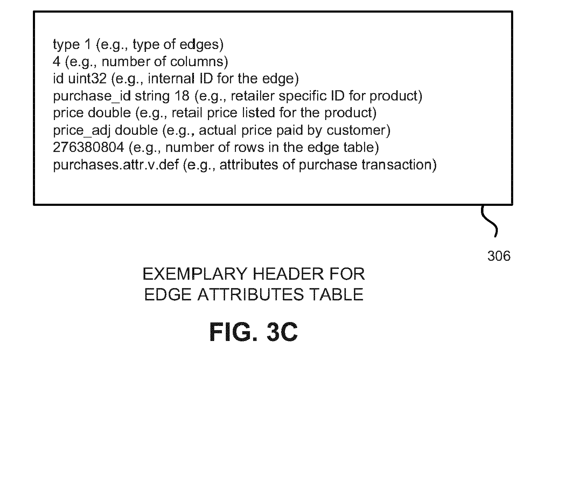

FIG. 3A to FIG. 3G illustrate exemplary headers and tables for customer data, product data, and edge data. System 100 generates headers and tables from base table 210. The headers describe the schema and provide other metadata associated with the tables. The section below describes the example headers and tables in greater detail. FIG. 3A illustrates an exemplary header for a customer table, FIG. 3B illustrates an exemplary header for a product table, and FIG. 3C illustrates an exemplary header for an edge attributes table. FIG. 3D illustrates an exemplary customer table, FIG. 3E illustrates an exemplary product table, FIG. 3F illustrates an exemplary edge attributes table, and FIG. 3G illustrates an exemplary graph topology table.

FIG. 3A presents a block diagram illustrating an exemplary header 302 for a customer table 308, according to an embodiment. Header 302 indicates the schema and other metadata for customer table 308. In one implementation, a type field in the header has a value of 2, indicating that the table stores customer data. Another header field may store the number of columns in customer table 308, which is 3 in the depicted example. An identifier field id indicates a column in customer table 308 which stores an internal identification number associated with the customer. A customer identifier field customer_id indicates a column in customer table 308 which stores a customer identifier assigned by the retailer. A string field class indicates a column in customer table 308 that stores customer information, such as name, address, and other customer data. Another header field indicates the number of rows in customer table 308, which is 155412 in the depicted example. Also, an optional header field customer.attr.v. def may store data indicating additional attributes of each customer. System 100 may write header 302 and customer table 308 in a set of text files, as part of generating the graph for input to graph analytics application 108. Note that this is one example of a header for customer data, and different implementations may utilize a customer header with different fields.

FIG. 3B presents a block diagram illustrating an exemplary header 304 for a product table, according to an embodiment. Header 304 indicates the schema and other metadata associated with product table 310, which includes a product ID, product description, and other data. In one implementation, a type field in the header has a value of 1, indicating that the table stores product data. Another header field may store the number of columns in product table 310, which is 3 in the depicted example. An identifier field id indicates a column in product table 310 which stores an internal identifier associated with the product. A product identifier field product_id indicates a column in product table 310 which stores a product identifier for the retailer. A string class indicates a column in product table 310 which stores a description of the product. Another header field indicates the number of rows in product table 310, which is 1990412 in the depicted example. Also, an optional header field product.attr.v.def may store data indicating additional attributes of each product. System 100 may write header 304 and product table 310 in a set of text files, as part of generating the graph for input to graph analytics application 108. Note that this is one example of a header for product data, and different implementations may utilize a product header with different fields.

FIG. 3C presents a block diagram illustrating an exemplary header 306 for an edge attributes table, according to an embodiment. Edge header 306 describes edge attributes table 312, which contains edge attribute information associated with purchase type transactions. In the example implementation, a type field in the header has a value of 1, indicating that the table stores attribute information associated with edges of type 1. Edges of type 1 represent purchases. In some implementations, other edges with different type values may represent refunds, webpage clicking-throughs, or some other type of transaction. Embodiments of the present invention are not limited to the exemplary edge types. Note that the type numbering system for edges is different from the type numbering system for vertices. Different applications may have any number of edge types, although in this example application there is one edge type for purchases only.

Another field in header 306 may store the number of columns in edge attributes table 312 (e.g., 4 in the depicted example of FIG. 3C). An internal identifier id indicates a column in edge attributes table 312 which stores an internal identifier for each edge. A retailer-specific identifier purchase_id represents purchase identifier information specific to a retailer. A price identifier indicates the retail price for a product, and a price_adj identifier indicates the actual price paid by the customer. One header field stores the number of rows in edge attributes table 312, which is 276380804 in the indicated example. Another field purchases.attr.v. def may store purchase attribute information. These fields are examples and some implementations may include additional fields, such as timestamps. Note that, in some embodiments, system 100 may include the maximum and minimum values for some columns if the columns store integer values. Further, this is one example of a header for edge data, and different applications may utilize an edge header with different fields.

FIG. 3D presents a block diagram illustrating an exemplary customer table 308 with sample customer data, according to an embodiment. Customer table 308 is an example of customer table 212 from FIG. 2. As depicted in FIG. 3D, customer table 308 may include three columns internal customer identifier 310, customer identifier 312, and description 314. System 100 may include customer table 308 with customer header 302 for submission to graph analytics application 108. Note that customer table 308 is only an example customer table and different implementations may have customer tables with any number of columns storing any types of values.

FIG. 3E presents a block diagram illustrating an exemplary product table 310 with sample product data, according to an embodiment. Product table 310 is an example of product table 214 from FIG. 2. As depicted in FIG. 3E, product table 310 may include three columns internal product identifier 318, product identifier 320, and description 322. System 100 may include product table 310 with product header 304 for submission to graph analytics application 108. Note that product table 310 is only an example product table and different implementations may have product tables with any number of columns storing any types of values.

FIG. 3F presents a block diagram illustrating an exemplary edge attributes table 312 with sample edge data, according to an embodiment. Edge attributes table 312 in FIG. 3F contains data describing edge attributes, and table 322 in FIG. 3G contains graph topology information. Separating the edge attributes data from the graph topology data allows Hipergraph to analyze the graph more efficiently. As depicted in FIG. 3F, edge attributes table 312 may include four columns edge type 314, internal ID 316, retail list price 318, and actual price paid 320. System 100 may include edge attributes table 312 with edge header 306 for submission to graph analytics application 108. Note that edge attributes table 312 is only an example and different implementations may have edge attributes tables with any number of columns storing any types of values.

FIG. 3G presents a block diagram illustrating a table 322 with exemplary edge data representing a graph topology, according to an embodiment. Each row of table 322 contains edge data representing a transaction, and the columns store data describing the customer ID, edge type, transaction ID, and product ID. A customer ID column 324 stores identifiers of customers associated with each transaction. An edge type column 326 stores type information of each transaction. Each one of the transactions illustrated in FIG. 3G are purchase transactions, as indicated by the value of 1 in the edge type column 326. A transaction ID column 328 stores an identifier for each transaction. A product ID column 330 stores an identifier for the product associated with each transaction.

System 100 may sort the columns of table 322 to adhere to the requirements of graph analytics application 108. For example, system 100 may sort by the customer ID, then the edge type, then the product ID, and then the transaction ID. One may specify to Hive the sort order for table 322 when writing table 322 to a text file. System 100 may also generate a redundant topology file containing the same data as table 322 but sorted differently (e.g., sorting according to different columns). Graph analytics application 108 may require this redundant topology file to facilitate efficient graph analysis. Note that storing the topology of the graph separately from the graph metadata facilitates efficient processing of the graph by allowing the system to not load the metadata until needed.

### Generating Tables and Headers

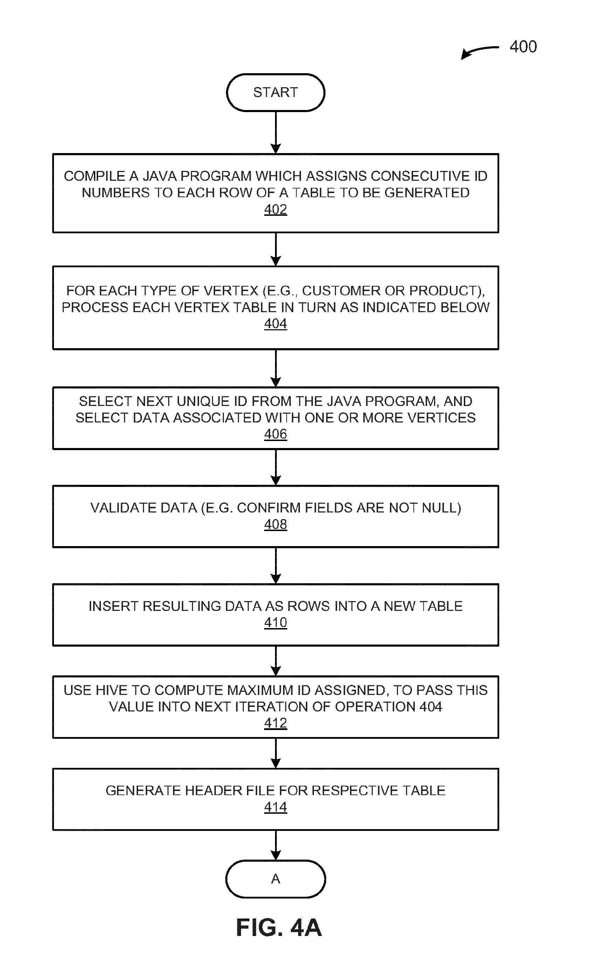

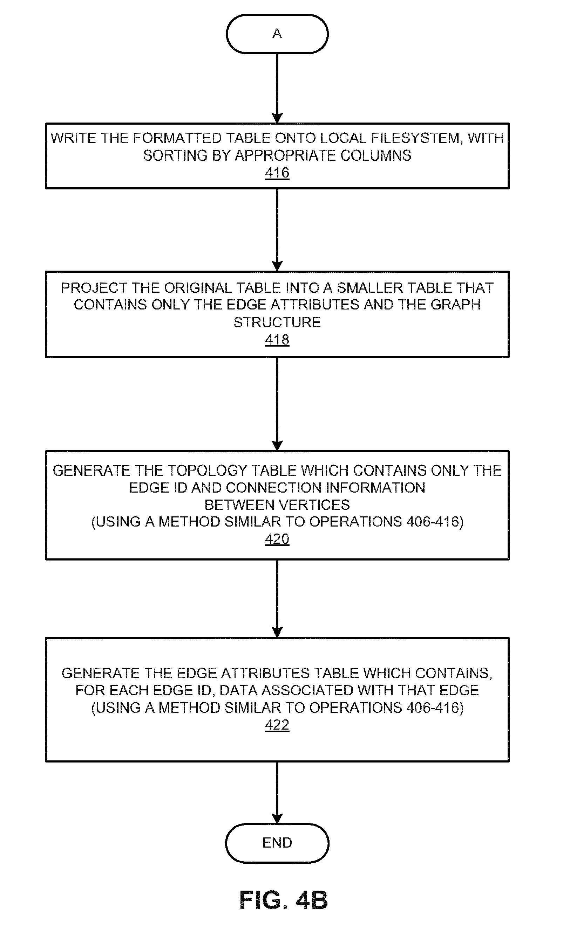

FIG. 4A and FIG. 4B presents a flowchart illustrating an exemplary process for generating tables and headers as input for the graph analytics application, according to an embodiment. System 100 executes the operations of FIG. 4A and FIG. 4B to generate intermediate tables (e.g., customer table 212, product table 214, and purchase table 216) from main table 210. System 100 also generates a topology table containing only edge ID and connection information between vertices, and an edge attribute table containing data associated with each edge ID. Further, system 100 generates headers associated with the intermediate tables, and stores the intermediate tables, headers, topology table, and edge attributes table in text files for input to graph analytics application 108. In one implementation, system 100 can execute a script (e.g. Bash script) to execute the operations depicted in FIG. 4A and FIG. 4B.

During operation, system 100 may initially compile a Java program which assigns consecutive ID numbers to each row of a table to be generated (operation 402). For each type of vertex (or edge data), system 100 executes steps that process (e.g., generates and/or populates) each vertex table (or edge-related table) in turn (operation 404). System 100 may execute operations 406 to 416 to generate and populate each respective intermediate table.

System 100 selects the next unique ID from the Java program, and selects data associated with one or more vertices (or edges) (operation 406). For example, system 100 may extract the data for customers/products by executing SQL statements such as SELECT DISTINCT on a column storing a customer ID/product ID (or edge ID). System 100 retrieves the data that are relevant for customers (e.g., for customer table 212) or the data that are relevant for products (e.g., for product table 216) (or data that are relevant for edges, e.g., for purchase table 216). With this operation system 100 can retrieve all the row data for populating the customer or product (or purchase) intermediate tables, and system 100 associates each row of the new table with a unique ID that increases in value with each added row. System 100 then validates the data (e.g., verifies that the fields are not null) (operation 408). System 100 may also normalize and re-factor data.

Next, system 100 inserts the resulting data as rows into a new table, such as customer table 212 or product table 214 (or purchase table 216) (operation 410). For example, for a customer John Smith, system 100 projects data including vertex ID and data associated with John Smith into customer table 308, along with data for all the other customers. In some implementations, when extracting transactions from main table 210, system 100 may separate transactions involving multiple products into multiple transactions, each transaction with a single product. In some implementations, some of these transactions may include refunds, purchases, or click-throughs. Hipergraph requires each row to be enumerated in sequence, so system 100 may assign consecutive ID numbers to each row, e.g., assign sequence numbers from 1 to the total number of customers/products/edges. In some implementations, the intermediate tables may store data in normalized form.

System 100 may then compute the maximum ID assigned (e.g., using Hive), and may pass this maximum ID value to the next iteration starting from operation 404 (operation 412). System 100 then generates a header file for a respective table (operation 414). Note that generating the header file may include computing the number of rows in the respective table and determining whether the columns are strings or integers. For integer columns, system 100 determines whether the columns are 8-bit, 16-bit, or 32-bit integers by examining the minimum and maximum values.

System 100 writes the formatted table onto the local file system, sorting by columns as appropriate (operation 416). In one implementation, system 100 may execute SQL queries to determine the size of strings and other fields in order to allocate disk space for the table. System 100 may generate text file 206 while writing the formatted table.

System 100 then projects the original table (e.g. main table 210) into a smaller table (e.g., purchase table 216) that contains only the edge attributes and the graph structure (operation 418). Subsequently, system 100 generates a topology table which contains only the edge ID and connection information between vertices, an example of which is depicted in FIG. 3G (operation 420). System 100 may execute a method similar to operations 406-416 to generate the topology table with only the connection and edge ID information. System 100 then generates an edge attribute table which contains, for each edge ID, data associated with that edge (operation 422). An example of the edge attribute table is depicted in FIG. 3F. System 100 may execute a method similar to operations 406-416 to generate the edge attribute table. After generating text files storing the headers and tables, system 100 may submit the text files to graph analytics application 108.

### Exemplary Apparatus

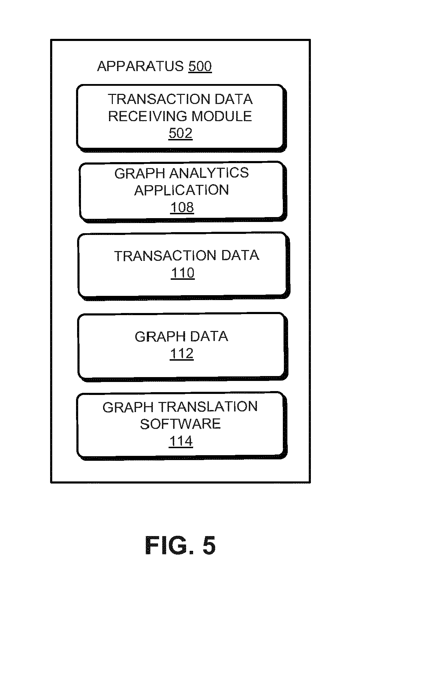

FIG. 5 presents a block diagram illustrating an exemplary apparatus 500 for generating a graph representation from transaction data, in accordance with an embodiment. Apparatus 500 can comprise a plurality of modules which may communicate with one another via a wired or wireless communication channel. Apparatus 500 may be realized using one or more integrated circuits, and may include fewer or more modules than those shown in FIG. 5. Further, apparatus 500 may be integrated in a computer system, or realized as a separate device which is capable of communicating with other computer systems and/or devices. Specifically, apparatus 500 can comprise a transaction data receiving module 502, graph analytics application 108, transaction data 110, graph data 112, and graph translation software 114. Note that apparatus 500 may also include additional modules not depicted in FIG. 5.

In some embodiments, transaction data receiving module 502 can receive the transaction data, such as purchase data. Graph analytics application 108 (e.g., Hipergraph) receives the generated graph and analyzes the generated graph to facilitate generating purchase recommendations. Graph translation software 114 executes the translation process described herein to generate graph data 112 from transaction data 110.

### Exemplary System

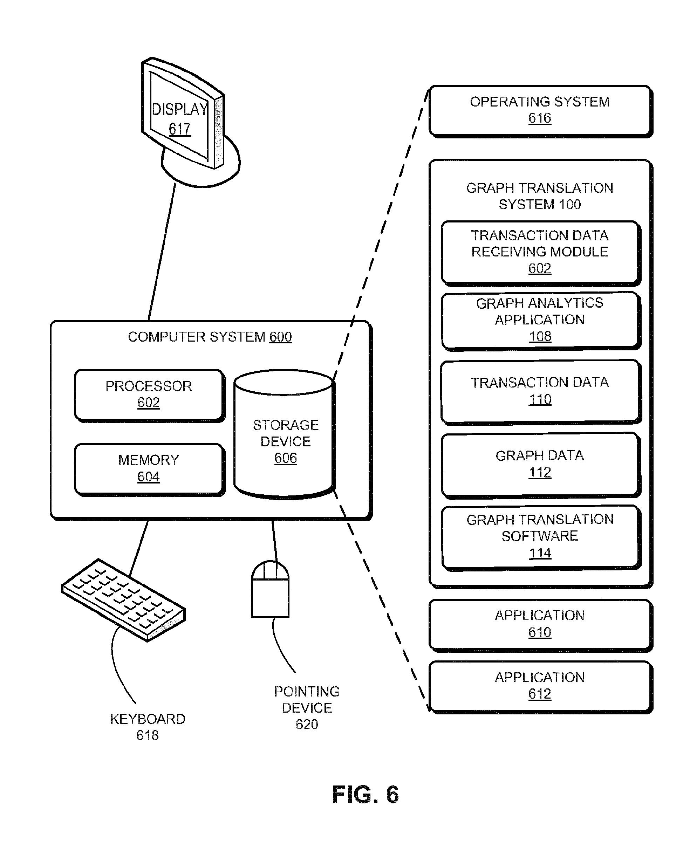

FIG. 6 illustrates an exemplary computer system 600 for generating a graph representation from transaction data, in accordance with an embodiment. In one embodiment, computer system 600 includes a processor 602, a memory 604, and a storage device 606. Storage device 606 stores a number of applications, such as applications 610 and 612 and operating system 616. Storage device 606 also stores graph translation system 100, which may include a transaction data receiving module 602, graph analytics application 108, transaction data 110, graph data 112, and graph translation software 114. During operation, one or more applications, such as graph translation system 100, are loaded from storage device 606 into memory 604 and then executed by processor 602. While executing the program, processor 602 performs the aforementioned functions. Computer and communication system 600 may be coupled to an optional display 617, keyboard 618, and pointing device 620.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, methods and processes described herein can be included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

The foregoing descriptions of various embodiments have been presented only for purposes of illustration and description. They are not intended to be exhaustive or to limit the present invention to the forms disclosed. Accordingly, many modifications and variations will be apparent to practitioners skilled in the art. Additionally, the above disclosure is not intended to limit the present invention.

## Claims

1. A computing system for generating a product recommendation by translating transaction data to graph representation for input to a graph analytics application, the system comprising:
one or more processors,
a computer-readable medium coupled to the one or more processors having instructions stored thereon that, when executed by the one or more processors, cause the one or more processors to perform operations comprising:
generating a transaction table to store transaction data, a customer table to store customer data, and a product table to store products data;
generating, with data from the transaction table, a table containing topology and edge identifier information and a table containing edge attribute information;
generating one or more headers that include data describing the customer table and/or the product table and/or the table containing edge attribute information;
generating one or more files containing the one or more headers and data from the tables, wherein the data describes a graph with edges representing transactions and vertices representing customers or products; and
submitting the one or more files as input to the graph analytics application to generate a product recommendation.

2. The computing system claim 1, wherein generating a transaction table, a customer table, and a products table comprises:
retrieving data from a table storing data according to a relational model.

3. The computing system of claim 1, wherein the transactions are purchase transactions.

4. The computing system of claim 1, wherein generating a customer table and/or product table and/or transaction table further comprises assigning unique consecutive integer values to each row of the customer table and/or product table and/or transaction table.

5. The computing system of claim 1, wherein the computer-readable storage medium stores additional instructions that, when executed, cause the computer to perform additional steps comprising:
sorting the table containing topology and edge identifier information first by the customer ID, then the edge type, then the product ID, and then the transaction ID.

6. The computing system of claim 1, wherein every step of the method is executed by a single script.
